# EUROPEAN PATENT APPLICATION

(11) **EP 1 933 534 A1**
(43) Date of publication of application: **18.06.2008**
(21) Application number: 06301253.8
(22) Date of filing: 14.12.2006
(51) Int. Cl.: H04L 29/08, H04L 12/28, H04L 12/56

(54) **Traffic splitting over uplink and downlink WIFI channels for peer-to-peer file sharing**

(71) Applicant: Thomson Licensing, 92100 Boulogne-Billancourt (FR)
(72) Inventor: Mhatre, Vivek, 75005, Paris (FR); Neumann, Christoph, 75015, Paris (FR); Diot, Christophe, 06230, Villefranche sûr mer (FR)
(74) Representative: Ruellan-Lemonnier, Brigitte

(57) **Abstract**

The invention concerns a network architecture comprising at least two communication devices (peers) and at least two wireless access points, characterized in that wireless access points are deployed such that a cluster of peers is covered by at least two wireless access points and in that neighboring wireless access points use orthogonal channels.

The invention also concerns a network access point and a method for transmitting content to a communication device connected to a wireless access point.

## Description

### FIELD OF THE INVENTION

The present invention pertains to the field of communication networks.

### BACKGROUND OF THE INVENTION

The invention proposes a mechanism for efficient peer-to-peer communication over WiFi networks for a *scenario of captive users*. In such a scenario, a large number of users are present over a small region, and wish to share files using a peer-to-peer communication model. The invention uses (i) intelligent splitting of the peer-to-peer traffic in the uplink and the downlink direction for mitigating channel contention, and (ii) intelligent allocation of channels to the wireless Access Points (APs) and the users for mitigating interference.

We consider a scenario in which a large number of peer-to-peer clients are co-located in a small region, and wish to communicate with each other using Wifi. In this context, an aim of the present invention is for the clients to be able to efficiently share files with each other in a peer-to-peer fashion. While Wifi seems to be the most obvious choice for such a communication, the increased level of interference and contention caused due to close proximity of clients can substantially degrade the throughput.

Since the source and destination peers are within close proximity of each other, other plausible communication architectures that are supported by the current technology are as follows:
1. Peers forward packets using a single AP as an intermediate hop.
2. Peers communicate directly with each other using the ad-hoc mode of communication.

However, in the state-of-the-art WiFi technology, simultaneous reception and transmission of packets using a single radio link is not possible. Hence, in option (1) above, the relaying of packets at the AP leads to throughput degradation. Option (2) above can lead to poor throughput due to increased contention and lack of co-ordination between multiple contending pairs of peers. It is also possible to have a single AP with two radio links, instead of requiring forwarding of packets from one AP to another. However, having multiple distinct APs with overlapping coverage improves the robustness of the system to AP failures.

### SUMMARY OF THE INVENTION

We propose a scheme in which wireless APs are deployed in such a manner that the peer-to-peer communication proceeds as follows. The peer which has content to send, starts transmitting its content to a nearby AP, which in turn forwards the content over the wired channel to a second AP. The forwarding second AP operates on an orthogonal channel and this second AP forwards the content to the destination peer.

The present invention is defined, in its broader sense, in claim 1.

Advantageous embodiments are presented in the dependent claims.

The invention consists of a network architecture for enabling a population of *captive users* to communicate over a WiFi network for efficient sharing of peer-to-peer content. The targeted scenario consists of a large number of peer-to-peer clients that are constrained within a small region. Some of the potential scenarios where such a model is applicable are (i) in-flight entertainment system where the entertainment units of all the seats participate in sharing audio-video content, (ii) spectators inside a stadium watching a sporting event, and exchanging audio-video content about other ongoing sports events, etc. Consider for example, the in-flight entertainment application.

In such scenarios, the use of wireless technology is an attractive means for communication. However, the design of the wireless communication architecture should take into account the high density of peers and the potentially high interference that could result from peer-to-peer communication. We propose the following wireless architecture that has been optimized for the use of peer-to-peer communication in captive audience scenarios.

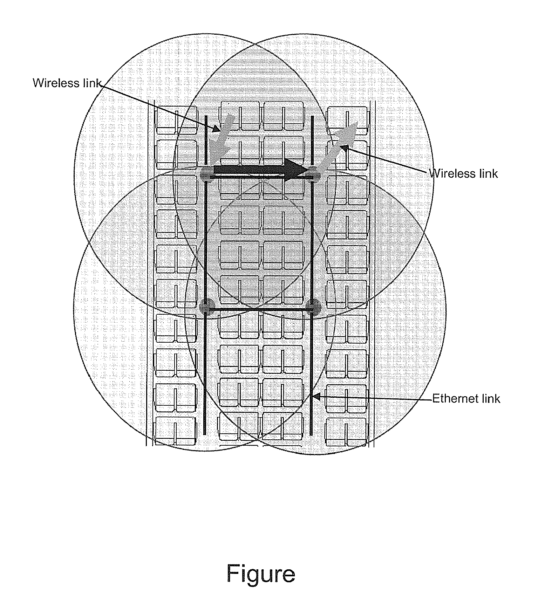

We divide the entire client population into smaller co-located clusters. Wireless APs are deployed such that each cluster of peers is covered by multiple (at least two) APs (see Figure). Neighboring APs use orthogonal channels, for example, 802.11g has 3 orthogonal channels while 802.11a has up to 12 orthogonal channels. The Figure represents an application in the field of In-Flight entertainment: seats in an aircraft are shown. We assume that the cluster sizes are dimensioned such that all the peers in a single cluster collectively have all the content. Hence, when a peer requires a certain file, it can download the content from another peer in its cluster.

The present invention proposes to architect this transfer over the wireless channel in the most bandwidth efficient and robust fashion. This is achieved as follows.

### BRIEF DESCRIPTION OF THE DRAWINGS

The following detailed description can be better understood through the attached figure which shows the envisioned network architecture for the present invention.

### DETAILED DESCRIPTION

In the proposed architecture, multiple access points (APs) are deployed, and are connected to each other through high-speed Ethernet. Note that it is relatively easy to wire a few APs rather than wire a large number of peers. A peer from the same cluster that can serve the requesting peer, then starts sending the file to one of the APs that are within its communication range. This file is downloaded on the requesting peer via a different AP which is covering the cluster, and this latter communication takes place over an orthogonal channel. In the Figure, an Access Point is represented by a small circle and the communication range of an AP is represented by a large circle. Since the upload and the download of the content take place over orthogonal channels, the transmissions can take place at the highest speed of the wireless channel. The APs co-ordinate the requesting and forwarding of files over the entire cluster such that at any given instant, multiple peers in the same cell that are uploading or downloading files do not contend for the same channel. This eliminates contention, and improves the throughput.

When the peers (clients) have data to upload/download, they communicate with all the APs in their range, and are advised by the APs to choose the best available AP and the corresponding channels. Since we design the system so that the coverage of multiple APs overlaps, this improves the robustness of the system to AP failures.

The standard network architectures that can be used for data transfer over Wifi, and their respective limitations are as follows:
1. Peers are organized in clusters, and each cluster is served by a single AP. In such a case, when a file is being transferred from one peer to another peer through the AP, simultaneous reception and transmission of packets at the AP is not possible. This reduces the throughput by half.
2. Each AP has two radios, and upload and download are over different radios. But this mechanism is not as robust as the proposed scheme, since the AP radios are co-located. In the proposed scheme, by using a single radio AP, and by separating them in space, we achieve better robustness to AP failure.
3. Peers form an ad-hoc network and communicate directly or using multi-hop. However, it is well known that the throughput degrades substantially over multi-hop paths. Even if all the paths within the same cluster are single hop paths, the issue of intra-cluster contention can still lead to throughput reduction. In the proposed scheme, the APs co-ordinate the channel assignment as well as data transfer, and thereby limit interference.

Thus the proposed system architecture exploits the nature of peer-to-peer traffic, and adapts the wireless infrastructure design for optimizing throughput as well as improving robustness.

The above specification, examples and the attached figure provide a complete description of the method according to the present invention. Since many embodiments of the invention can be made without departing from the spirit and scope of the invention, the invention resides in the claims herein after appended.

## Claims

1. Network architecture comprising at least two communication devices (peers) and at least two wireless access points, **characterized in that** wireless access points are deployed such that a cluster of peers is covered by at least two wireless access points and **in that** neighboring wireless access points use orthogonal channels.

2. Network architecture according to claim 2 **characterized in that** the size of said cluster of peers is dimensioned such that all the peers in a single cluster collectively have all a given content in its entirety.

3. Network access point connected to at least two communication devices (peers) through a wireless channel and to at least another network access point through a wired channel **characterized in that** it comprises means to upload and download data from/to said peers using orthogonal wireless channels and **in that** it comprises means to manage requesting and forwarding of files over a cluster of peers such that at any given instant, multiple peers, in the area covered by said network access point, that are uploading or downloading files do not contend for the same channel.

4. Method for transmitting content to a communication device connected to a wireless access point **characterized in that** it comprises the following steps:
• transmitting content from a sending communication device (sending peer) to a first wireless access point on a first channel ;
• transmitting said content from said first wireless access point to a second wireless access point over a wired channel ; and
• transmitting content from said second wireless access point to said communication device (destination peer) on a channel, which is orthogonal to said first channel.
